# EUROPEAN PATENT APPLICATION

(11) **EP 2 309 735 A1**
(43) Date of publication of application: **13.04.2011**
(21) Application number: 09773441.2
(22) Date of filing: 29.06.2009
(51) Int. Cl.: H04N 5/76, G06F 12/06, G06K 17/00, H04N 5/225, H04N 5/765, H04N 5/907, H04N 5/91

(54) **RECORDING CONTROL DEVICE**

(30) Priority: 30.06.2008 JP 2008169890
(71) Applicant: Nikon Corporation, Tokyo 100-8331 (JP)
(72) Inventor: HAYASHI Masaki, Chiyoda-ku Tokyo 1008331 (JP)
(74) Representative: Müller - Hoffmann & Partner
(86) International application number: PCT/JP2009/061868
(87) International publication number: WO 2010/001863

(57) **Abstract**

A recording control device includes: an interface unit 20 to that a removable storage medium 30 is affixed; a detection unit 10 that detects whether the storage medium 30 affixed to the interface unit 20 is a write-once storage medium; and a recording control unit 10 that controls to restrict one portion of a predetermined access functions relating to the storage medium 30, when the write-once storage medium 30 is detected by the detection unit 10.

## Description

### {Technical Field}

The present invention relates to a recording control device to that a write-once storage medium can be affixed.

### {Background Art}

Conventionally, disposable digital cameras have been proposed which write image data obtained by shooting to a write-once memory card that allows the writing of data only one time (see PTL 1) . The configuration of the write-once memory card is such that data cannot be rewritten onto an area on which data has been written once, while the writing of additional data is possible. Moreover, as the configuration allows manufacture at low cost and thus provision at relatively low prices, the write-once memory card has been generally and widely employed.

### {Citation List}

### {Patent Literature}

{PTL 1} Japanese Patent Laid-open Publication (A) No. 2007-166040

### {Summary of Invention}

### {Technical Problem}

However, in cameras and other devices to that memory cards can be affixed, even in the case that a write-once memory card is affixed, it is possible to access the memory card for the purpose of writing or reading data, similarly to the case that a regular memory card is affixed. As such, a user may unintentionally save data to the memory card, other than image data obtained by shooting by the camera, such as information on camera settings, for example, or data may be written to the memory card from external devices connected to the camera, without the intent of the user. Therefore, in these cases, the unnecessary data written in the write-once memory card cannot be erased, and thus the effective use of the memory card's storage capacity is not realized.

An object of the present invention is to provide a recording control device that controls access to the storage medium and thereby allows efficient use of the storage capacity of the write-once storage medium.

### {Solution to Problem}

A recording control device according to the present invention includes: an interface unit to that a removable storage medium is affixed; a detection unit that detects whether the storage medium affixed to the interface unit is a write-once storage medium; and a recording control unit that controls to restrict one portion of a predetermined access functions relating to the storage medium, when the write-once storage medium is detected by the detection unit.

### {Advantageous Effects of Invention}

According to the present invention, in the case that a write-once storage medium is affixed, it is possible to control to restrict one portion of access to the storage medium, and thus access that carries the possibility of writing unnecessary data is restricted, and the effective use of the storage capacity of the write-once storage medium is possible.

### {Brief Description of Drawings}

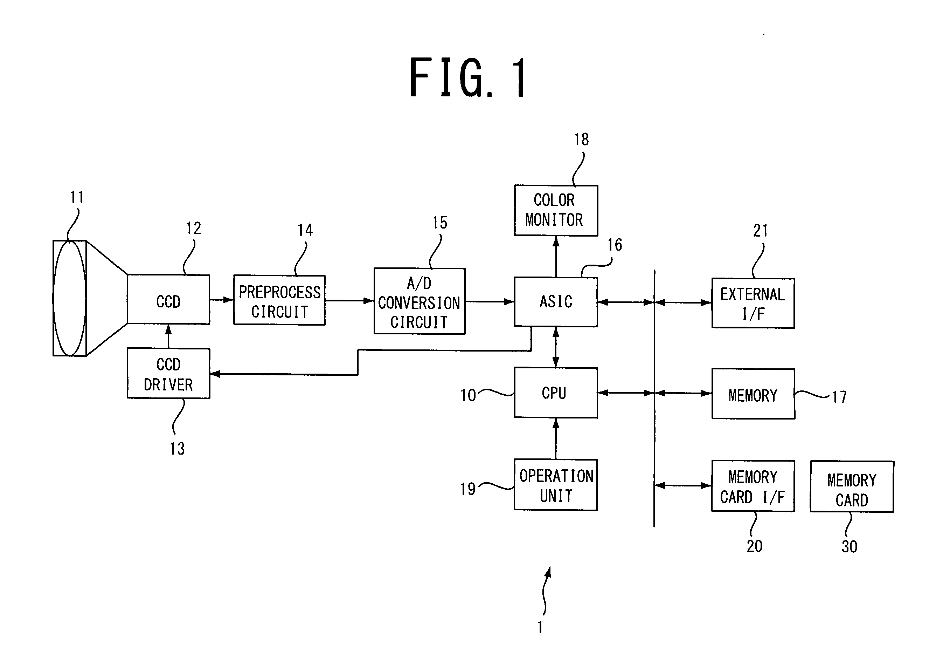

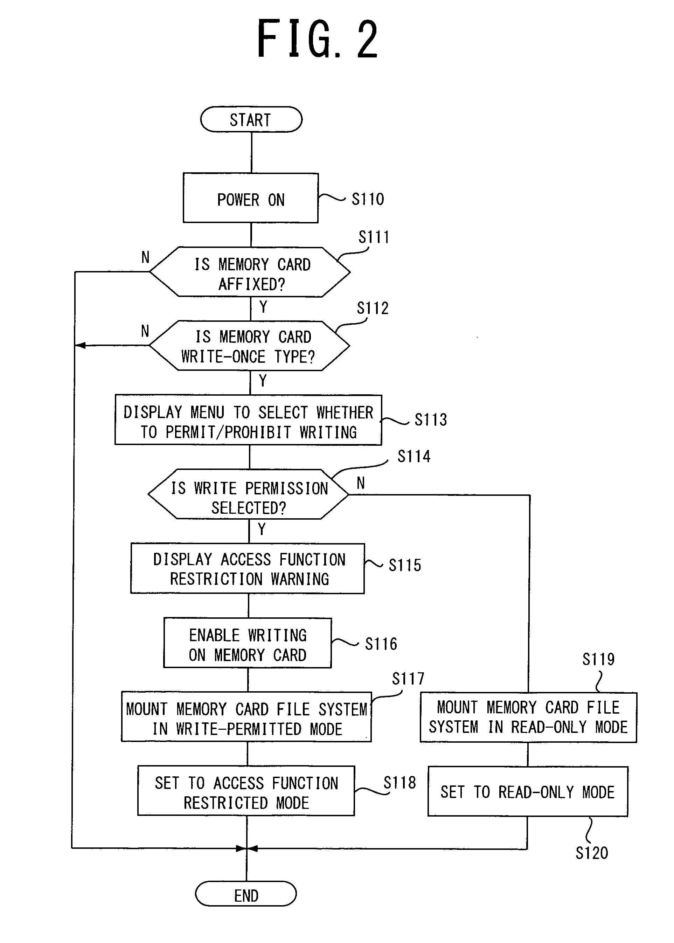

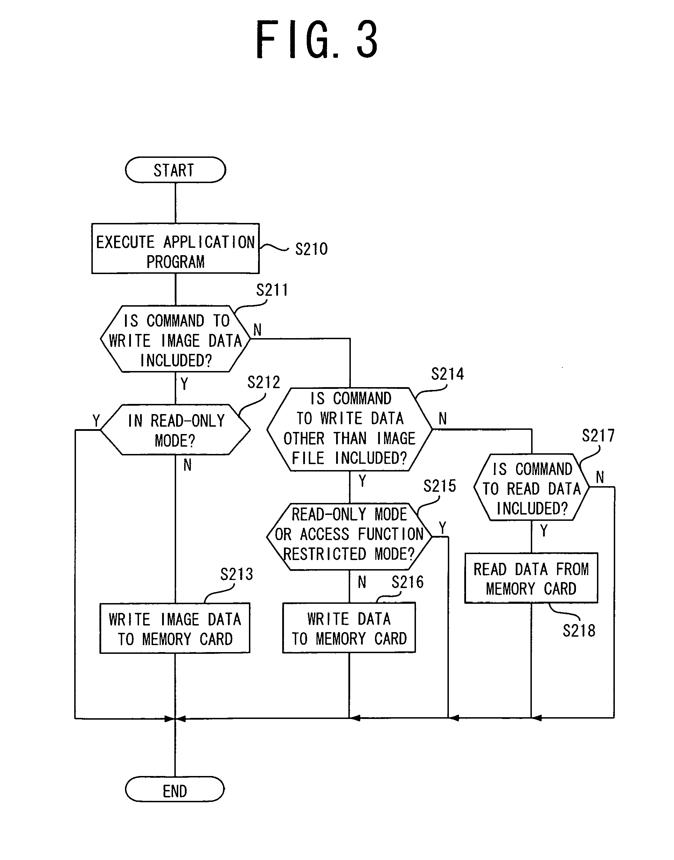

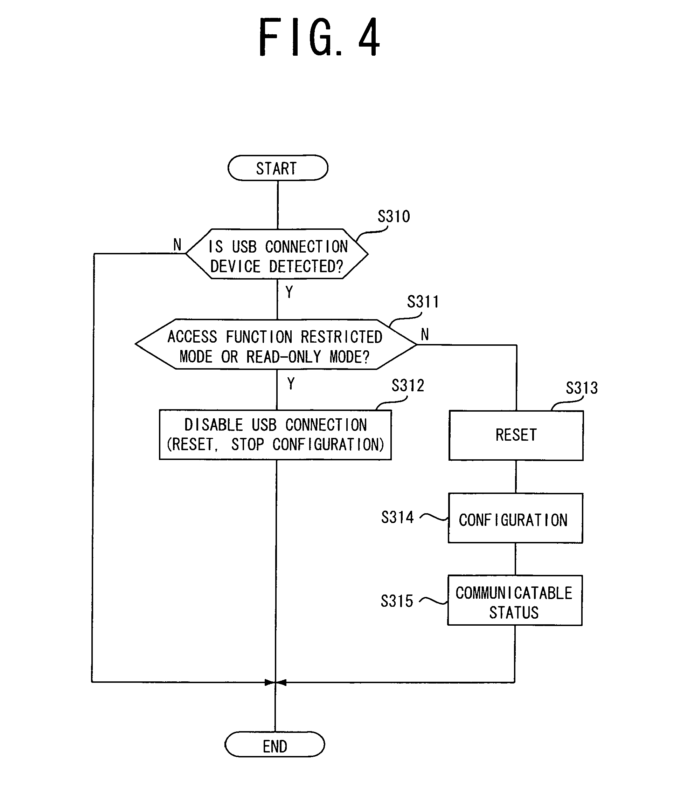

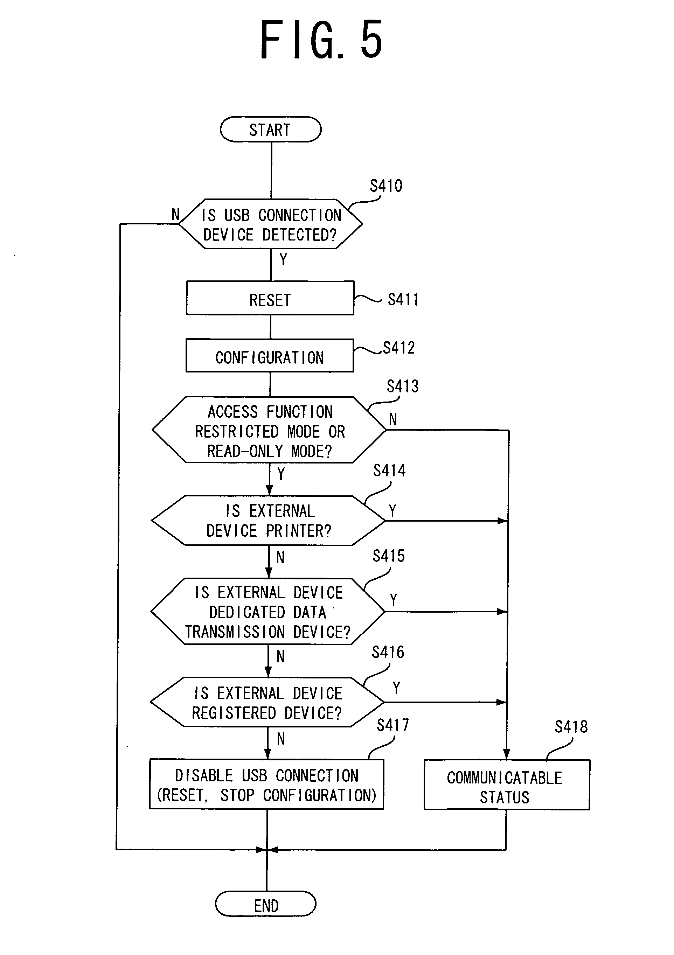

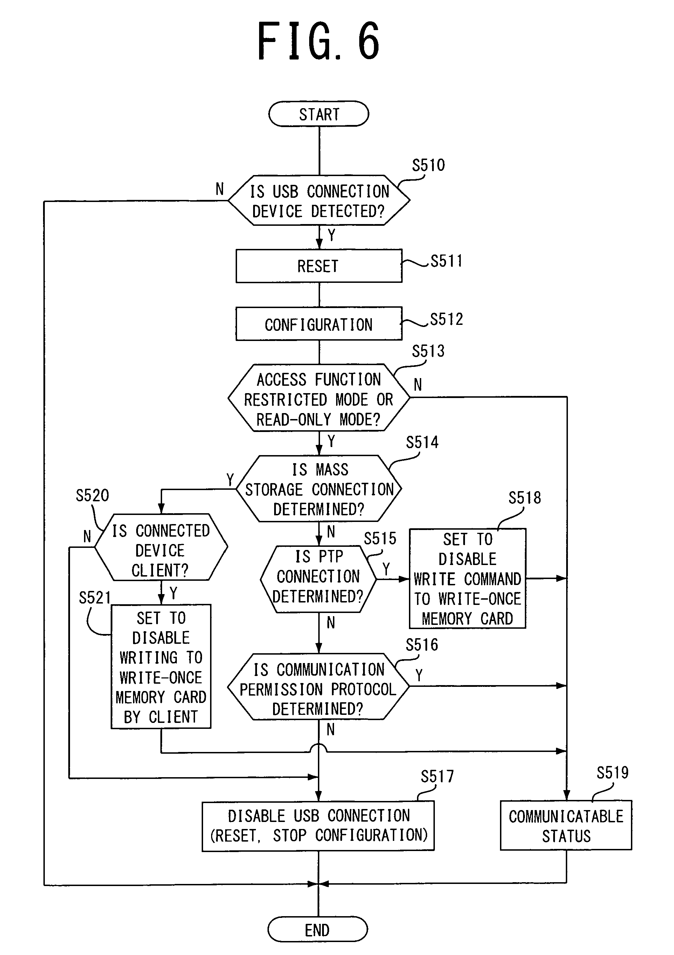

{FIG. 1} FIG. 1 is a block diagram of a camera according to a first embodiment.
{ FIG. 2} FIG. 2 is a flowchart showing an operating mode setting process of the camera according to the first embodiment.
{FIG. 3} FIG. 3 is a flowchart showing a process of writing or reading data to or from a memory card of the camera according to the first embodiment.
{FIG. 4} FIG. 4 is a flowchart showing a process when an external device is affixed to the camera according to the first embodiment.
{FIG. 5} FIG. 5 is a flowchart showing a process when the external device is affixed to the camera according to a second embodiment.
{FIG. 6} FIG. 6 is a flowchart showing a process when the external device is affixed to the camera according to a third embodiment.

### {Description of Embodiments}

Hereinafter, a camera including a recording control device according to a first embodiment of the present invention will be explained. In the camera according to the embodiment, in the case that a write-once memory card is affixed and permission to write to the memory card has been set by a user, the camera operates in an access function restricted mode that partially restricts an access function relative to the memory card, and when prohibition to write to the memory card is set, the camera operates in a read-only mode in which only a read operation is performed from the memory card. In the access function restricted mode according to the embodiment, among the write access functions for writing data to the memory card, write access for the writing of data other than the image data obtained by capturing is restricted, and furthermore, in order to prevent writing to the memory card from an external device affixed to the camera, connection to the external device is restricted. However, if the memory card is not a write-once memory card, then the camera operates in a normal mode without restricting the writing.

FIG. 1 is a block diagram showing the configuration of the camera according to the first embodiment. As shown in the diagram, the camera 1 is configured with a photographic lens 11, a CCD 12, a CCD driver 13, a preprocess circuit 14, an A/D conversion circuit 15, an Application Specific Integrated Circuit (ASIC) 16, a memory 17, a color monitor 18, an operation unit 19, a memory card I/F 20, an external I/F 21, and a CPU 10.

The CCD 12 captures light of a subject through the photographic lens 11, and accumulates an electrical charge according to the brightness of the subject. Under the control of the CCD driver 13, an analog signal of the accumulated electrical charges is output to the preprocess circuit 14. The preprocess circuit 14 amplifies the analog signal that is output from the CCD 12 and performs an analog process including noise removal and black level correction. The A/D conversion circuit 15 converts the analog signal that is analog-processed by the preprocess circuit 14 into a digital signal. Furthermore, the ASIC 16 performs image processing, such as contour compensation and gamma correction, on the digital signal converted by the A/D conversion circuit 15, and, in accordance with the Exchangeable Image File Format (Exif) standard, generates header information data including time and date when shooting the image data, a shutter speed thereof, and compression information thereof, and generates thumbnail image data by reducing the image-processed image data to a predetermined size, and then, using JPEG or other methods, compresses the header information data, the thumbnail image data, and image-processed primary image data to create an image file.

The memory 17 is configured by Dynamic Random Access Memory (DRAM), acts as a working memory used in executing programs by the CPU 10, and temporarily stores the image-processed image data. The color monitor 18 is configured by a liquid crystal display, and displays an image, camera setting information, etc. The operation unit 19 is configured to include operation buttons such as a power switch and a release button, and receives operations by the user.

The memory card I/F 20 is a connection interface with a removable memory card 30, and relays the transmission and reception of read/write commands and data between the affixed memory card and the camera 1. The external I/F 21 is a USB connection interface for external devices such as PCs, and relays communication between the connected external devices and the camera 1.

The memory card 30 is a write-once memory card, and is configured by a flash memory that stores data, a memory controller that controls the writing or reading of data in response to the read/write commands transmitted from the camera 1 via the memory card I/F 20, and a register that stores card attribute information such as data write block information and information indicating the card's status as write-once media, and is formatted based on a predetermined file system. In this embodiment, after carrying out a write-enabling process by which the memory card 30 transmits a response of write permission in response to a write permission request from the camera 1, the memory card 30 is put into a state in which data can be written. Furthermore, when the camera 1 does not request the write permission to the memory card 30, the memory card 30 is controlled in a read-only manner.

The CPU 10, by executing application programs housed in ROM (not shown), controls the components that configure the camera 1 . These application programs are, for example, a program by which image data captured by the user's operating a release button is recorded to the memory card 30, or a program by which camera setting data previously set by the user to the camera 1, such as white balance, flash exposure compensation value, and ISO sensitivity, is recorded to the memory card 30. Furthermore, the CPU 10, in accordance with the operating mode described above, performs a process of writing the captured image data, camera setting data, temporary files created during execution of application programs, and other data, to the memory card 30, and performs a process of reading the image file stored onto memory card 30. Furthermore, when an external device which can be USB connected is affixed to the external I/F 21, USB connection is established with the external device to establish a state to enable communication with the external device, and access is enabled from the external device to the memory card 30 affixed to the camera 1.

Next, the operation of the camera 1 according to the first embodiment will be explained. First, the operating mode setting process of setting the operating mode of the camera 1 according to the first embodiment is explained by using a flowchart in FIG. 2. When the power is set to ON by the user by means of the operation unit 19 (step S110), the CPU 10 determines whether the memory card 30 is affixed to the memory card I/F 20 (step S111).

In the case that the CPU 10 determines that the memory card 30 is not affixed to the memory card I/F 20 (step S111: N), the CPU 10 ends the operating mode setting process, and in the case that the CPU 10 determines that the memory card 30 is affixed (step S111: Y), the CPU 10 acquires the card attribute information from the memory card 30 and determines whether the memory card 30 is a write-once memory card (step S112).

In the case that the CPU 10 determines that the memory card 30 is not the write-once memory card (step S112: N), the CPU 10 ends the operating mode setting process. Furthermore, in the case that the CPU 10 determines that the memory card 30 is the write-once memory card (step S112: Y), the CPU 10 displays on the color monitor 18 a selection menu screen that allows the user to select whether to permit or prohibit writing to the memory card 30 (step S113).

In the case that the user has, through the operation unit 19, selected to permit writing to the memory card 30 (step S114: Y), the CPU 10, as warning information to restrict access functions with respect to the memory card 30, displays on the color monitor 18 information to the effect that the writing of data other than captured image data will be restricted and that USB connection to an external device affixed to the external I/F 21 will be disabled (step S115).

Moreover, the CPU 10 transmits a write permission request to the memory card 30 to permit the writing of data, and upon receiving a response of write permission from the memory card 30, the CPU 10 performs a write-enabling process on the memory card 30 (step S116). The CPU 10 acquires the file system from the memory card 30, mounts a file system in a write-permitted mode in a predetermined memory area (step S117), and sets an access function restricted mode as the current operating mode (step S118).

Furthermore, in the case that the user has, through the operation unit 19, selected to prohibit the writing to the memory card 30 (step S114: N), the CPU 10 acquires the file system from the memory card 30, mounts the file system in a read-only mode in a predetermined memory area (step S119), and sets the read-only mode as the current operating mode (step S120).

Next, the operation of the camera 1 after the operating mode setting process described above will be explained. The process of writing and reading data to and from the memory card 30, and the process when the external device is affixed to the external I/F 21, will each be explained below.

FIG. 3 is a flowchart showing the process of writing and reading data to and from the memory card 30. The CPU 10, in response to the user operation through the operation unit 19, reads application programs from a ROM to execute these programs (step S210). When the application program includes a command to write the image data temporarily stored in the memory 17 to the memory card 30 (step S211: Y), then if the current operating mode is the read-only mode (step S212: Y), the CPU 10 skips the command to write the image file to the memory card 30 and ends the process. Furthermore, when the current operating mode in step S212 is not the read-only mode, that is, when the current mode is the access function restricted mode or the normal mode (step S212: N), the CPU 10 reads the image data from the memory 17 and, referencing the file system, issues a write command to write the image data to the memory card 30, and thereby writing the image data to the memory card 30 (step S213).

Furthermore, when the currently executing application program includes a command to write data, such as the camera setting data, the temporary file, etc., other than the image data to the memory card 30 (steps S211: N, S214: Y), and if the current operating mode is not the read-only mode nor the access function restricted mode (stepS215: N), then the CPU 10, in accordance with the write command, references the file system and issues a write command to write data to the memory card 30, and thereby writing the data to the memory card 30 (step S216). Furthermore, when the current operating mode in step S215 is the read-only mode or the access function restricted mode (step S215: Y), the CPU 10 skips the write command and ends the process.

Furthermore, when the currently executing application program includes a command to read data from the memory card 30 (step S211: N, S214: N, S217: Y), the CPU 10, regardless of the operating mode and in accordance with the read command, references the file system, issues a read command to read the data, and then reads the data from the memory card 30 (step S218). Furthermore, when the currently executing application program includes a command other than the command to read the data from the memory card 30 (step S217: N), the CPU 10 ends the process of writing and reading data to and from the memory card 30.

Next, an operation when an external device is affixed to the external I/F 21 will be explained using a flowchart in FIG. 4. In the case that an external device which can be USB connected via the external I/F 21 is detected (step S310: Y), and when the current operating mode is the access function restricted mode or the read-only mode (step S311: Y), the CPU 10 outputs a RESET signal to the external device and stops the USB connection process which performs configuration, and disables the USB connection to the external device (step S312).

When the current operating mode is not the access function restricted mode nor the read-only mode (step S311: N), the CPU 10 transmits the RESET signal to the external device for a predetermined period of time (step S313). Moreover, the CPU 10 transmits a device descriptor forwarding request to the external device, receives the device descriptor from the external device, imparts the external device with an address, and performs configuration (step S314). As a result, the CPU 10 enables the USB connection to establish a state where communication with the external device is enabled (step S315). Furthermore, in step S310, when the CPU 10 has not detected the external device that can be USB connected via the external I/F 21 (step S310: N), the CPU 10 ends the process.

In the embodiment, in the case that the write-once memory card is affixed, permission or prohibition of writing to the memory card can be selected by the user, and thus it is possible to set the operating mode for the camera 1 according to the user selection. Furthermore, even in the case that the user has selected the write permission, the camera 1 can restrict writing in order that data other than the captured image data is not written to the memory card. As such, the camera 1 can prevent temporary files from being written by applications without the intent of the user, or from camera settings or other data being mistakenly written by the user, onto the write-once memory card. Furthermore, since the connection to the external device can be disabled so as to disallow access to the memory card from the affixed external device, it is possible to prevent operations such as those in which the external device affixed to the camera 1 writes the data to the memory card affixed to the camera 1 as a removable disk, and thus the limited storage area of the memory card can be used effectively.

In the embodiment described above, when the write-once memory card 30 is affixed, the selection of permission or prohibition of writing to the memory card is received from the user, but when the memory card for which the operating mode has been set once is affixed, it is also acceptable, upon switching on the power, to display a selection menu allowing acknowledgment of the currently set operating mode, and then to receive the selection of the user. In this case, information indicating the current operating mode is recorded onto a predetermined area of the memory card 30 before switching off the power, and each time the camera 1 is powered on, the operating mode information is read and is displayed in the selection menu.

Furthermore, in the above-described embodiment, when the write-once memory card 30 is affixed, the selection of permission or prohibition to write to the memory card is received from the user, but it is acceptable, for example, for write permission to be set in advance as the default, with a selection graphic displayed so that the default setting may be recognized.

Furthermore, in the above-described embodiment, the communication standard with the external devices is described as the USB standard, but other communication standards such as IEEE802.3 or IEEE1394 are also possible.

Furthermore, the embodiment is described using a camera, but other information devices to which the write-once memory cards and other storage media can be affixed, such as mobile telephones or PDAs, are also possible.

Next, a camera including a recording control device according to a second embodiment of the present invention will be explained. This camera including the recording control device according to the second embodiment differs from the camera including the recording control device according to the first embodiment, in modifications to operation when the external device is affixed to the external I/F 21. Therefore, detailed explanation concerning the configuration that is identical to that of the above-described camera 1 is omitted, and only portions that differ are described in detail. Moreover, the same reference numerals are assigned to the configuration that is identical to that of the camera 1.

FIG. 5 is a flowchart showing an operation when the external device is affixed to the external I/F 21 of the camera including the recording control device according to the second embodiment. In the case that the CPU 10 detects the external device which can be USB connected via the external I/F 21 (step S410: Y), the CPU 10 transmits the RESET signal to the external device for a predetermined period of time (step S411). Moreover, through the same process as that described in the above step S314, the CPU 10 imparts the external device with an address and performs configuration, and at the same time, acquires device information of the external device (step S412). Subsequently, when the current mode is the access function restricted mode or the read-only mode (step S413: Y), the CPU 10, through steps S414 to S416, determines whether the external device is a device which can perform the writing process on the memory card 30.

First, based on the acquired device information of the external device, it is determined whether the external device is a printer (step S414). In the case that the external device is not a printer, it is determined whether the external device is a wireless transmitter or other dedicated data transmission device which only performs data transmission to the external device from the camera 1 in transmitting and receiving the data (step S415) . In the case that the external device is not the dedicated transmission device, it is determined whether the external device is a device which has previously been registered as a device which does not perform the writing process on the memory card 30 (step S416) . In the case that the external device is not the device which has previously been registered, the RESET signal is output to the external device and the USB connection process which performs configuration is stopped, and the USB connection to the external device is disabled (step S417).

In the case that the external device is not the device which performs the writing process on the memory card 30, that is, in the case that the external device is the printer (step S414: Y), or in the case that the external device is the dedicated transmission device (step S415: Y), or in the case that the external device is the device which has previously been registered (step S416: Y), the CPU 10 enables the USB connection to establish a state where communication with the external device is enabled (step S418).

Furthermore, even when the current mode is not the access function restricted mode nor the read-only mode (step S413: N), the CPU 10 enables the USB connection to establish a state where communication with the external device is enabled (step S418). Furthermore, in step S410, when the CPU 10 has not detected the external device which can be USB connected via the external I/F 21 (step S410: N), the CPU 10 ends the process.

In this embodiment, as the determination of whether to perform connection to the external device is made according to the type of the affixed external device, data is not inadvertently written by the external device to the memory card. Furthermore, even in the case that the external device is the printer and the write-once memory card 30 is in the access function restricted mode or the read-only mode, an image stored on the memory card 30 can be printed via PictBridge, for example. Furthermore, even in the case that the external device is the dedicated transmission device such as a wireless transmitter and the write-once memory card 30 is in the access function restricted mode or the read-only mode, the image data stored on the memory card 30 can be transmitted via the dedicated transmission device to a PC or server.

Next, a camera including a recording control device according to a third embodiment of the present invention will be explained. This camera including a recording control device according to the third embodiment differs from the camera including the recording control device according to the second embodiment outlined above, in modifications to operation when the external device is affixed to the external I/F 21. Therefore, the detailed explanation concerning the configuration that is identical to that of the above-described camera 1 is omitted, and only difference portions are described in detail. Moreover, the same reference numerals are used for the configuration that is identical to that of the camera 1.

FIG. 6 is a flowchart showing an operation when the external device is affixed to the external I/F 21 of the camera including the recording control device according to the third embodiment. Since processes shown in steps S510 to S513 are the same as those in steps S410 to S413 shown in FIG. 5, the description is omitted. Subsequently, when the current mode is the access function restricted mode or the read-only mode (step S513: Y), confirmation of the connection status with the external device is performed.

First, it is determined whether the external I/F is connected to the external device by way of mass storage connection (step S514) . In the case that the mass storage connection is not detected, it is determined whether the communication protocol is Picture Transfer Protocol (PTP) (step S515). In the case that the communication protocol is not the PTP, it is determined whether the communication protocol is a connection permission protocol under which the write command is not output from the external device to the memory card 30 (step S516). In the case that the connection permission protocol is not detected, the RESET signal is output to the external device and the USB connection process that performs configuration is stopped, and the USB connection to the external device is disabled (step S517).

Furthermore, in the case that the communication protocol for connection to the external devices is PTP (step S515: Y), setting is performed to disable the write command to the write-once memory card 30 (step S518), and the CPU 10 enables the USB connection to establish a state where communication with the external device is enabled (step S519). Furthermore, in the case that the communication protocol for connection to the external devices is a connection permission protocol (step S516: Y), the CPU 10 enables the USB connection to establish a state where communication with the external device is enabled (step S519) .

Furthermore, in the case of the connection to the external device by way of the mass storage connection (step S514: Y), it is determined whether the connected device is connected as a client (step S520) . In the case that the connected device is not connected as a client, that is, in the case that the connected device is connected as a host, the RESET signal is output to the external device and the USB connection process that performs configuration is stopped, and the USB connection to the external device is disabled (step S517) .

On the other hand, in the case that the connected device is connected as the client (step S520: Y), setting is performed to disable the writing to the write-once memory card 30 (step S521), and the CPU 10 enables the USB connection to establish a state where communication with the external device is enabled (step S519). Furthermore, in step S510, when the CPU 10 has not detected the external device that can be USB connected via the external I/F 21 (step 510: N), the CPU 10 ends the process.

In this embodiment, the determination of whether to perform connection to the external device is made according to the connection status, such as a communication protocol, with the affixed external device, and the writing to the memory card by the external device is disabled even in the case that connection is enabled. As a result, the data is not inadvertently written.

However, although in the above-described embodiment, the configuration is such that the USB connection process is stopped and the USB connection to the external device is disabled, a configuration which, in the place of the process of disabling the USB connection, recognizes that the memory card 30 is not affixed to the memory card I/F 20 is also acceptable and a configuration which recognizes that a vacant capacity of the memory card 30 affixed to the memory card I/F 20 is zero is also acceptable.

### (Reference Sings List)

10···CPU, 11···photographic lens, 12···CCD, 13···CCD driver, 14···preprocess circuit, 15···A/D conversion circuit, 16···ASIC, 17···memory, 18···color monitor, 19···operation unit, 20···memory card I/F, 21···external I/F, and 30···memory card

## Claims

1. A recording control device, comprising:
an interface unit to that a removable storage medium is affixed;
a detection unit that detects whether the storage medium affixed to the interface unit is a write-once storage medium; and
a recording control unit that controls to restrict one portion of a predetermined access functions relating to the storage medium, when the write-once storage medium is detected by the detection unit.

2. The recording control device according to claim 1, comprising
a selection receiving unit that receives a selection of whether to permit the writing of data to a storage medium, when the write-once storage medium is detected by the detection unit, wherein
the predetermined access function includes a write access function for writing the data to the storage medium, and
the recording control unit, when the selection to permit the writing of data to the storage medium is received by the selection receiving unit, controls to write to the storage medium by restricting one portion of the write access functions.

3. The recording control device according to claim 1 or 2, further comprising
an external device interface unit to that a removable external device is affixed, wherein
the predetermined access functions include an external device connection function that performs connection to the external device affixed to the external device interface unit, and
the recording control unit restricts the external device connection function when the write-once storage medium is detected by the detection unit.

4. The recording control device according to claim 2 or 3, wherein
the recording control device is a camera including an imaging sensor that captures subject light and outputs an imaging signal, and
the recording control unit, when the write-once storage medium is detected by the detection unit, restricts a function of writing to the storage medium data other than image data that is based upon the imaging signal output by the imaging sensor.

5. The recording control device according to claim 4, wherein
the data other than the image data is temporary file data or user setting data for the camera.

6. The recording control device according to any of claims 3 to 5, wherein
the external device interface unit is a USB connectable interface, and
the external device connection function is a function of performing the USB connection to the external device affixed to the external device interface unit.

7. The recording control device according to claim 3 or 6, further comprising
a device information acquisition unit that acquires device information of the external device, wherein
the recording control unit restricts the external device connection function in response to the device information.

8. The recording control device according to claim 7, wherein
the recording control unit enables connection by the external device connection function, when the external device is a device that does not perform a writing process on the storage medium in determination based on its device information.

9. The recording control device according to claim 8, wherein
the device that does not perform the writing process is a printer, a dedicated transmission device, or a previously registered device.

10. The recording control device according to claim 3 or 6, wherein
the recording control unit restricts the external device connection function in accordance with a type of communication protocol used to perform a connection to the external device.

11. The recording control device according to claim 10, wherein
the connection by the external device connection function is enabled when the type of communication protocol is PTP.

12. The recording control device according to claim 3 or 6, wherein
when the external device is mass storage connected as a client, the connection by the external device connection function is permitted, and when the external device is mass storage connected as a host, the connection by the external device connection function is restricted.
